# EUROPÄISCHE PATENTSCHRIFT

(11) **EP 2 384 616 B1**
(45) Veröffentlichungstag und Bekanntmachung des Hinweises auf die Patenterteilung: **26.03.2014**
(21) Anmeldenummer: 11003598.7
(22) Anmeldetag: 03.05.2011
(51) Int. Cl.: A01D 80/02, A01D 89/00

(54) **Aufnahmevorrichtung an Erntemaschinen**
Pickup device on harvesting machines
Dispositif de réception sur des moissonneuses

(30) Priorität: 07.05.2010 DE 102010019693
(43) Veröffentlichungstag der Anmeldung: 09.11.2011
(73) Patentinhaber: B. Strautmann & Söhne GmbH & Co. KG, 49196 Bad Laer (DE)
(72) Erfinder: Kleine-Nieße, Richard, 49536 Lienen (DE)
(74) Vertreter: Hoffmeister, Helmut

(56) Entgegenhaltungen:
- EP-A1- 1 980 144
- WO-A1-2008/073182
- DE-A1- 3 315 033
- DE-A1- 3 722 365
- DE-A1- 3 914 482

## Beschreibung

Die Erfindung betrifft eine Aufnahmevorrichtung an Erntemaschinen nach dem Oberbegriff des Anspruchs 1. Solche Aufnahmevorrichtungen sind in verschiedenen Varianten als gesteuerte und ungesteuerte Aufnahmetrommeln bekannt.

Bei ungesteuerten Aufnahmevorrichtungen, werden die Trommeln an ihrer Oberfläche mit aus Doppelschenkelfedern gebildeten Aufnahmezinken besetzt, bei gesteuerten Aufnahmetrommeln befinden sich die Aufnahmezinken auf vorzugsweise aus Rohren gebildeten Zinkenträgern. Beide Versionen genügen den stetig wachsenden Leistungsanforderungen bei der Ernteeinbringung und den dadurch erhöhten Belastungen der Aufnahmezinken nur noch bedingt.

Aus DE 3722365 A1 ist eine Einrichtung zum Befestigen von Doppelfederzinken auf den Tragrohen von Halmgutaufnahmevorrichtungen bekannt. Dabei werden die Doppelfederzinken von einem Halter 3 aufgenommen und gemeinsam mit diesem am Tragrohr 1 mittels einer Spannschraube befestigt. Die so hergestellte Verbindung schaffte einen verdrehsicheren Sitz der Doppelfederzinken. Der Halter 3 ist jedoch nicht zur Anbringung auf einer Aufnahmetrommel, welche einen im Vergleich zu einem Tragrohr wesentlichen größeren Durchmesser aufweist, geeignet. Weiterhin wird der bruchgefährdete Bereich der Doppelfederzinken, welcher sich im

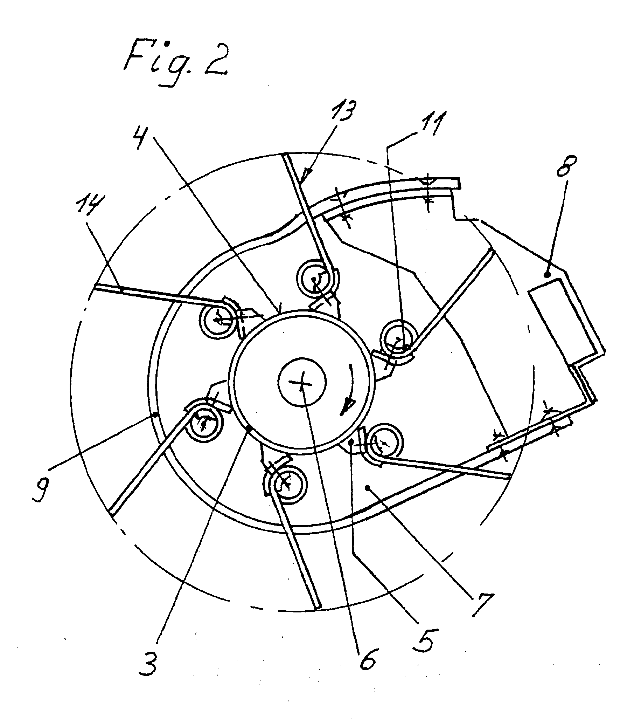

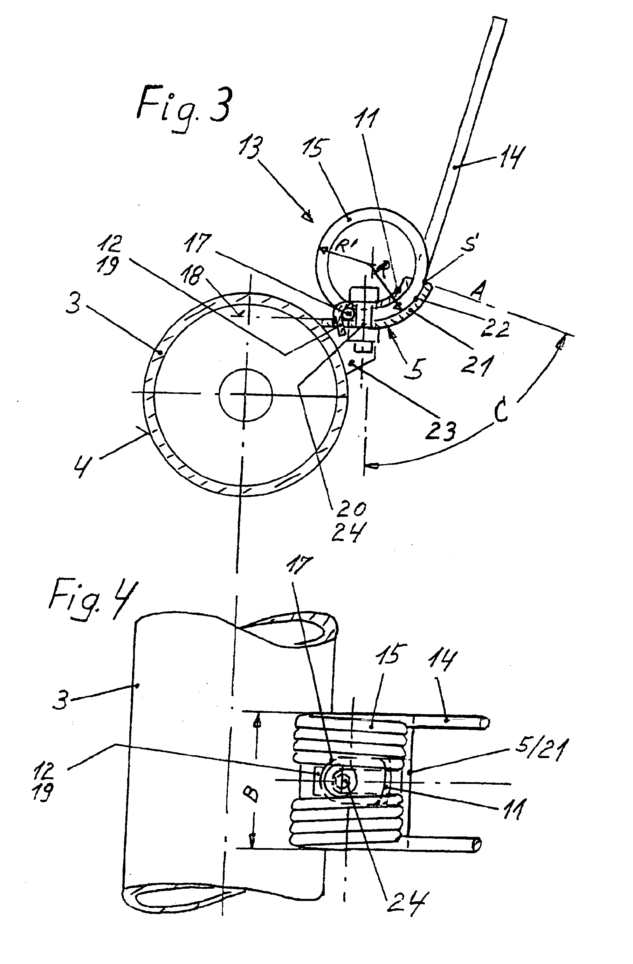

Übergangsbereich der jeweils äußeren Federwindung zum geraden Zinkenende befindet, nicht durch den Halter 3 abgestützt. Die am Halter 3 vorgesehene mittlere Klaue 14 reicht nicht bis zur äußeren Windung und stützt diese somit auch nicht ab (Fig. 3) und die äußeren Klauen 13, 13' stützen nur die Gegenseite des kritischen Bereiches des Doppelfederzinkens (Fig. 2).

DE 3315033 A1 zeigt eine Aufnahmetrommel für gemähtes Erntegut mit einer Anzahl von auf Zinkenträgern angebrachten Doppelfederzinken. Der Einsatz einer Aufnahmetrommel alternativ zu Zinkenträgern ist nicht vorgesehen und systembedingt auch nicht möglich, da für die Festlegung der Zinkenbewegung voneinander unabhängige Zinkenträger erforderlich sind, die mittels einer Kurvenbahn gesteuert werden. Weiterhin stützen auch hier die Haltebügel 14 keine Stützfläche aus, die geeignet wäre, die Zinken im schon beschriebenen, bruchkritischen Bereich abzustützen.

Die steigende Anzahl von Erntemaschinen mit breiteren Aufnahmevorrichtungen, die voluminösere Futterschwaden, die von Schwadern zunehmender Breite zusammengelegt werden und deutlich gestiegene Arbeitsgeschwindigkeiten, bei dadurch erhöhter Aufnahmeleistung, beanspruchen die Aufnahmezinken zunehmend, so dass diese nach oft nur kurzer Einsatzzeit ausfallen, wobei insbesondere die Verbreiterung der Aufnahmevorrichtungen hohe Beanspruchungen nach sich ziehen, da die Anpassung an unebene Böden, durch die vergrößerte Arbeitsbreite erschwert ist.

Die Aufnahmezinken geraten hierbei häufiger in Kontakt mit Bodenwellen oder sonstigen am Boden hochragenden Unebenheiten, wobei die Bodenberührung die Schenkel der Aufnahmezinken, zur Drehrichtung nachlaufend, zum Ausweichen zwingt. Nach Beendigung des Bodenkontaktes springen die Schenkel schlagartig nach vorn, in ihre Normalstellung zurück. Die hierbei freigesetzte Energie führt zu hohen Vibrationsbelastungen der Doppelschenkelfedern. Mit den zuvor genannten höheren Beanspruchungen durch die Maximierung der Arbeitsleistung, führen auch diese Belastungen dazu, dass die Aufnahmezinken frühzeitig, vorwiegend durch abbrechende Schenkel, ausfallen.

Um die genannten Nachteile zu beheben, reichen erfahrungsgemäß Änderungen der Materialqualität nicht aus. Ebenso sind die Befestigungen der Aufnahmezinken an bekannten Aufnahmevorrichtungen nicht optimal geeignet, Abhilfe zu schaffen.

Nach der Europäischen Patentschrift EP 0903077 B1 und der Europäischen Patentanmeldung EP 1980144 A1, sind beispielsweise Ausführungen der Anbringung von Aufnahmezinken bekannt, bei denen die Schenkel der Doppelfederzinken gar nicht oder nur ungenügend abgestützt werden, so dass diese Doppelfederzinken weiterhin weitgehend stützungslos in alle Richtungen federn und vibrieren können. Für die genannten, erhöhten Anforderungen, scheinen diese Anordnungen daher wenig geeignet.

Zur Behebung der genannten Beeinträchtigungen wird erfindungsgemäß nach Anspruch 1 vorgesehen, die als Doppelschenkelfedern ausgebildeten Aufnahmezinken derart zu stützen, dass deren federnde Bewegungen weitgehend kontrolliert und gedämpft ablaufen. Durch geeignete Ausführung der Befestigung der Doppelschenkelfedern kann so die Lebensdauer derselben, wie durch Versuche bestätigt, um ein mehrfaches gesteigert werden.

Die Erfindung wird nachstehend an einem Beispiel beschrieben und in den Zeichnungen dargestellt.

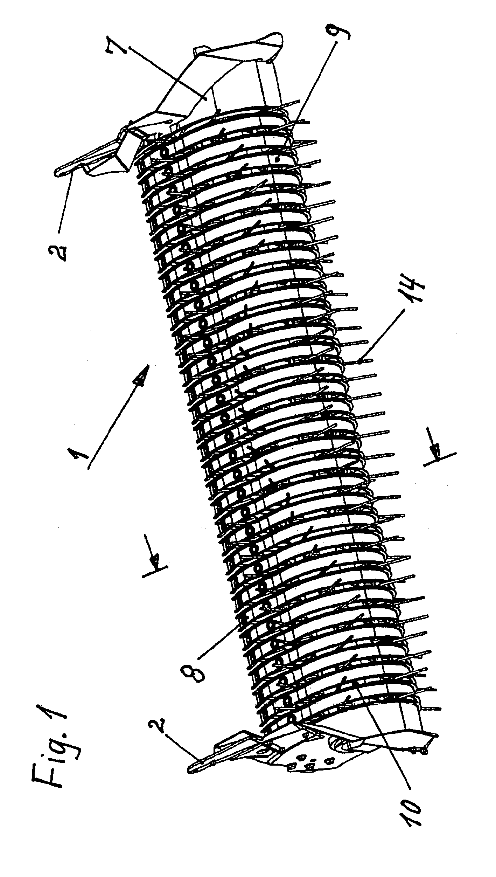

- Fig. 1: zeigt eine perspektivische Ansicht auf die Aufnahmevorrichtung, von vorn gesehen,
- Fig. 2: zeigt einen Querschnitt der Aufnahmevorrichtung,
- Fig. 3: zeigt die Befestigung eines Aufnahmezinkens auf einem an der Trommel angebrachten Halter,
- Fig. 4: zeigt die Draufsicht zu Fig. 3,

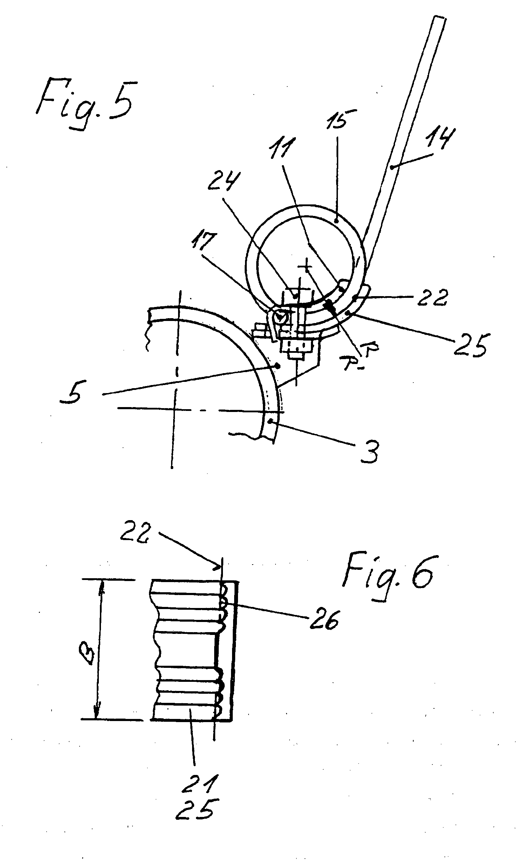

- Fig. 5: zeigt einen, mit der Zwischenplatte versehenen Halter,
- Fig. 6: zeigt die Anlehnung der Windungen in Rillen einer Stützfläche.

Die Aufnahmevorrichtung (1) wird mit ihren Tragarmen (2) an einer hier nicht näher dargestellten Erntemaschine schwenkbar angebracht, sie besteht im Wesentlichen aus einer mit Haltern (5) bestückten Trommel (3), deren Achse (6) in Seitenwänden (7) drehbar gelagert ist und aus dem Gestell (8), an welchem einen Gehäusemantel formende Abstreifer (9), Spalten (10) bildend, angebracht sind, wobei durch die Spalten (10) die Schenkel (14) der auf den Haltern (5) befestigten Aufnahmezinken (13) hervortreten.

Die Halter (5) sind in gleichmäßig versetzten Reihen, die linear oder spiralförmig außen auf dem Mantel (4) der Trommel (3) verlaufen, angeordnet, sie bestehen jeweils aus einer, von einem Loch (20) für Befestigungsschraube (24) und einem Schlitz (19) für einen Anschlag (12) durchbrochenen Auflagefläche (18), an welcher nach unten gerichtete Seitenstege (23) anschließen. An die Auflagefläche (18) schließt sich ferner eine Verlängerung an, die eine Stützschale (21) darstellt, deren Innenseite eine Stützfläche (22) bildet, deren Ausrundung einem Radius (R) entspricht, der mit dem äußeren Radius (R') der Windungen (15) identisch ist. Die Breite der Stützschale (21) entspricht der Breite (B) des Aufnahmezinkens (13) über alle Windungen (15) gemessen. Die Stützfläche (22) erstreckt sich vorzugsweise über den Bereich des Winkels (C), von der Auflagefläche (18) bis zu einem Schnittpunkt (S), am tangentialen Ablauf der Schenkel (14) von den Windungen (15).

Die Aufnahmezinken (13) entsprechen Doppelfederzinken, zwischen deren gegensinnig gewundenen Windungen (15) eine Öse (17) zur Befestigung angeordnet ist und jeweils, anschließend an die äußeren Windungen (15), tangential verlaufende, parallel zueinander ausgerichtete, gerade Schenkel (14) anschließen.

Befestigt werden die Aufnahmezinken (13), indem die Öse (17) auf die Auflagefläche (18) gesetzt wird, mittels einer aufgelegten Druckplatte (11), die mit ihrem Anschlag (12) einen Schlitz (19) durchgreift und die Mutter einer Befestigungsschraube (24), welche Druckplatte (11), Öse (17) und Halter (5) durchgreift und zusammenspannt, gegen Verdrehung sichert. Um optimale Ergebnisse zu erzielen sind die Teile so aufeinander abgestimmt, dass nach dem Spannvorgang die Windungen (15) mit geringem Druck an der Stützfläche (22) anliegen.

Die Druckplatte (11) stützt, jeweils am Innendurchmesser der Windungen (15) anliegend, vornehmlich die erste linke und rechte von der Öse (17) ausgehende Windung (15) ab. Die Anlagefläche der Druckplatte (11) bedeckt, von der Befestigungsschraube (24) ausgehend gesehen, vorteilhaft etwa einen Bereich von 40° am inneren Umfang.

In Anordnung zur Arbeitsrichtung der rotierenden Trommel (3), sind die Aufnahmezinken (13) derart montiert, dass die Schenkel (14), unter Belastung, nach hinten ausweichen. Die ausweichenden Schenkel (14) erzeugen in den Windungen (15) außen Zug- und innen Druckspannungen, die bei Rückstellung in die Ausgangslage wieder abgebaut werden. Bei auftretenden, hierbei über die Ruhestellung hinaus rückfedernden, in Vibrationsschwingungen geratenen Schenkeln (14), treten Wechselspannungen auf, welche zu extremen Beanspruchungen und zu vorzeitigem Ausfall bisher bekannter Aufnahmezinken führen, da deren Dauerfestigkeit und einfache Befestigungen den erhöhten Ansprüchen nicht mehr genügen.

Durch die erfindungsgemäße Stützschale (21), an den Haltern (5), werden die Windungen (15) von den Stützflächen (22), an denen sie zur Anlage kommen, schwingungs- und vibrationsdämpfend beruhigt, wodurch sich die Lebensdauer der Aufnahmezinken (13) um ein mehrfaches verlängert.

Im Arbeitseinsatz der Aufnahmevorrichtung (1) heben die Schenkel (14) der Aufnahmezinken (13) das am Boden liegende Erntegut auf und führen es an der Oberseite, auf den Abstreifern (9) gleitend, einer nachgeordneten Press- oder Fördereinrichtung einer Erntemaschine zu.

Die Gewichts- und Vorschubbelastung des Ernteguts erzeugt, je nach Art und Zustand desselben, ein entsprechendes Verdrehmoment an den Aufnahmezinken (13), welches im schließenden Sinn die Schenkel (14) zurückweichen lässt. Nach Entlastung der Aufnahmezinken (13) nehmen die Schenkel (14), nach Übergabe des Ernteguts, wieder die spannungsfreie Ausgangslage ein.

Die Windungen (15), deren Anlage an die Stützfläche (22) sich, wegen Verringerung der Durchmesser der Windungen (15), unter Belastung lockerte, legen sich wieder fest an und kommen schonend, ohne größere Nachschwingungen zur Ruhe.

Bei einem Kontakt der Aufnahmezinken (13) mit Bodenwellen, steinigen Böden oder sonstigen am Boden befindlichen Widerständen, entstehen gegenüber der Erntegutaufnahme extrem höhere Belastungen durch plötzliches, schlagartiges Auftreffen der Schenkel (14), wenn die Berührung einsetzt und hierbei, durch die oft größeren Verdrehwinkel, die Materialspannungen in den Aufnahmezinken (13) weiter steigen. Da der Bodenkontakt durch die Rotation der Trommel (3) umgehend wieder aufgehoben wird, geraten die Schenkel (14) beim Zurückspringen in ihre Ausgangsposition, durch die plötzliche Entspannung, in Schwingungen und Vibrationen, welche durch Anlage der Windungen (15) an die Stützfläche (22) schnell gedämpft und abgebaut werden.

In einem weiteren Ausführungsbeispiel wird gezeigt, wie bei der Entspannung der Windungen (15), durch Schwingungen und Vibration noch entstehende Verschleißspuren, auf den Stützflächen (22), durch eine auswechselbare Zwischenplatte (25), vom Halter (5) ferngehalten werden können.

In Ergänzung der Ausführungsmöglichkeiten können die Stützflächen (22) von Stützschale (21), bzw. Zwischenplatte (25) mit Rillen (26) ausgestattet sein, in welche sich die Windungen (15) abstützen, auch kann die Oberkante (A) der Stützschale (21), einem variablen Winkel (C) entsprechen, über oder unter dem Schnittpunkt (S) angeordnet sein. Die Breite (B) kann so ausgeführt sein, dass äußere Windungen (15) nicht aufliegen. Um eine spürbare Abstützung der Windungen (15) zu erreichen, soll der Winkel (C) ca. 40° betragen.

Die Zwischenplatte (25) besteht vorzugsweise aus verschleißarmen und schlagfestem Material.

**Bezugszeichenliste:**

| | | | |
|---|---|---|---|
| 1 | Aufnahmevorrichtung | A | Oberkante |
| 2 | Tragarm | B | Breite |
| 3 | Trommel | C | Winkel |
| 4 | Mantel | R | Radius |
| 5 | Halter | R' | Radius |
| 6 | Achse | S | Schnittpunkt |
| 7 | Seitenwand | | |
| 8 | Gestell | | |
| 9 | Abstreifer | | |
| 10 | Spalt | | |
| 11 | Druckplatte | | |
| 12 | Anschlag | | |
| 13 | Aufnahmezinken | | |
| 14 | Schenkel | | |
| 15 | Windung | | |
| | | | |
| 17 | Öse | | |
| 18 | Auflagefläche | | |
| 19 | Schlitz | | |
| 20 | Loch | | |
| 21 | Stützschale | | |
| 22 | Stützfläche | | |
| 23 | Seitensteg | | |
| 24 | Befestigungsschraube | | |
| 25 | Zwischenplatte | | |
| 26 | Rille | | |

## Patentansprüche

1. Aufnahmevorrichtung (1) an Erntemaschinen, bei welcher Zinkenhalter (5) vorgesehen sind, an welche jeweils ein aus einer in Windungen (15) gelegten Doppelschenkelfeder bestehender Aufnahmezinken (13) befestigt ist, wobei die beiden Schenkel (14) der Doppelschenkelfedern durch Spalten (10) zwischen parallel zueinander verlaufenden, einen Gehäusemantel bildenden Abstreifern (9) aus der Aufnahmevorrichtung (1) hervortreten, wobei sie im Arbeitseinsatz Erntegut vom Boden aufheben und es an eine Förder- oder Presseinrichtung einer Erntemaschine, wie z.B. Ladenwagen oder Ballenpresse, übergeben,
wobei die Zinkenhalter jeweils von einer die Federn von außen entlastenden Stützschale (21) unterfangen sind, deren Stützfläche (22) eine Ausrundung bildet, deren Radius (R) dem äußeren Radius (R') der Windungen (15) einer Doppelschenkelfeder entspricht, und
sich die Stützfläche (22) in ihrer Breite (B) über alle Windungen (15) erstreckt, **dadurch gekennzeichnet, dass**
- die Zinkenhalter (5) auf der Oberfläche einer antreibbaren Trommel (3) angebracht sind und
- die Halter (5) eine Auflagefläche (18) aufweisen, an die sich die Stützschale (21) anschließt und **dass** sich die Stützfläche (22) über einen Winkel (C) von der Auflagefläche (18) bis zum Schnittpunkt (S) der äußeren Windungen (15) mit den sich ablösenden Schenkeln (14) erstreckt.

2. Aufnahmevorrichtung nach Anspruch 1, **dadurch gekennzeichnet, dass** die Stützfläche (22) sich über einen Winkel (C) von etwa 40° ±10° erstreckt.

3. Aufnahmevorrichtung nach den Ansprüchen 1 - 2, **dadurch gekennzeichnet, dass** sich die Stützfläche (22) im Bereich zwischen den Schenkeln (14) über den Schnittpunkt (S) hinaus erstreckt.

4. Aufnahmevorrichtung nach den Ansprüchen 1 - 3, **dadurch gekennzeichnet, dass** die Stützschale (21) ein Bestandteil des Zinkenhalters (5) ist.

5. Aufnahmevorrichtung nach den Ansprüchen 1 -4, **dadurch gekennzeichnet, dass** die Stützschale (21) Bestandteil einer auswechselbaren Zwischenplatte (25) ist, welche zwischen der Doppelschenkelfeder und dem Zinkenhalter (5) angeordnet ist.

6. Aufnahmevorrichtung nach den Ansprüchen 1 - 5, **dadurch gekennzeichnet, dass** die Stützfläche (22) am Zinkenhalter (5) bzw. an der Zwischenplatte (25) Rillen (26) aufweist.

7. Aufnahmevorrichtung nach den Ansprüchen 1 -6, **dadurch gekennzeichnet, dass** zwischen den Windungen (15) eine Öse (17) angeordnet ist und dass eine Druckplatte (11) von der Windungsöse (17) ausgehend die jeweils innere Windung (15) abstützt.

8. Aufnahmevorrichtung nach Anspruch 7, **dadurch gekennzeichnet, dass** die Druckplatte (11) die Windungen (15) innerhalb derselben anliegend in einem Winkelbereich von 40° ± 10° abstützt.

9. Aufnahmevorrichtung nach einem der Ansprüche 5 und 6-8, sofern diese von Anspruch 5 abhängig sind, **dadurch gekennzeichnet, dass** die Zwischenplatte (25) aus verschleißarmen und schlagfestem Material besteht.

## Claims

1. Pick-up apparatus (1) on harvesting machines, in which tine holders (5) are provided, to which in each case a pick-up tine (13) consisting of a double leg spring arranged in windings (15) is attached, wherein the two legs (14) of the double leg springs emerge out of the pick-up apparatus (1) through gaps (10) between strippers (9) which extend in parallel with one another and form a housing casing, wherein when deployed they pick up crop from the ground and transfer it to a conveying or pressing device of a harvesting machine, such as e.g. a loader wagon or baling press, wherein the tine holders (5) are captured underneath by a supporting shell (21) which relieves the load on the springs from outside and whose supporting surface (22) forms a rounded portion whose radius (R) corresponds to the outer radius (R') of the windings (15) of a double leg spring, and the supporting surface (22) extends in terms of its width (B) over all of the windings (15), **characterised in that**
- the tine holders (5) are mounted on the surface of a drivable drum (3) and
- the holders (5) have a bearing surface (18) which is adjoined by the supporting shell (21) and that the supporting surface (22) extends over an angle (C) from the bearing surface (18) to the point of intersection (S) of the outer windings (15) with the alternating legs (14).

2. Pick-up apparatus as claimed in claim 1, **characterised in that** the supporting surface (22) extends over an angle (C) of about 40° ± 10°.

3. Pick-up apparatus as claimed in claims 1-2, **characterised in that** the supporting surface (22) extends beyond the point of intersection (S) in the region between the legs (14).

4. Pick-up apparatus as claimed in claims 1-3, **characterised in that** the supporting shell (21) is a component of the tine holder (5).

5. Pick-up apparatus as claimed in claims 1-4, **characterised in that** the supporting shell (21) is a component of an interchangeable intermediate plate (25) which is arranged between the double leg spring and the tine holder (5).

6. Pick-up apparatus as claimed in claims 1-5, **characterised in that** the supporting surface (22) has grooves (26) on the tine holder (5) or on the intermediate plate (25).

7. Pick-up apparatus as claimed in claims 1-6, **characterised in that** an eyelet (17) is arranged between the windings (15) and that a pressure plate (11) supports the respectively inner winding (15) starting from the winding eyelet (17).

8. Pick-up apparatus as claimed in claim 7, **characterised in that** the pressure plate (11) supports the windings (15), abutting inside same, in an angular range of 40° ± 10°.

9. Pick-up apparatus as claimed in any one of claims 5 and 6-8, when dependent upon claim 5, **characterised in that** the intermediate plate (25) consists of a low-wear and impact-resistant material.

## Revendications

1. Dispositif collecteur (1) pour moissonneuses, équipé de supports de griffes (5), dans lequel est fixée, sur chacun desdits supports, une griffe (13) constituée d'un double ressort spiralé (15) à branches (14) dont les deux branches (14) se déploient à l'extérieur du dispositif collecteur (1), à travers des fentes (10) ménagées entre des racloirs (9) disposés parallèlement entre eux et formant une enveloppe de carter, pour collecter - en situation de travail - le produit de la récolte au sol et le remettre à un dispositif de transport ou une presse, présents sur la moissonneuse, par exemple une chargeuse ou une presse à balles, tandis que les supports de griffes (5) sont chacun maintenus par un coussinet (21) qui soutient le ressort de l'extérieur et dont la surface de soutien (22) forme une cavité dont le rayon (R) correspond au rayon extérieur (R') des spires (15) d'un double ressort à branches, ladite surface de soutien (22) s'étendant, dans sa largeur (B), sur l'ensemble des spires (15), **caractérisé en ce que** les supports de griffes (5) sont agencés sur la face supérieure d'un tambour (3) qui peut être entraîné, **en ce que** lesdits supports (5) possèdent une surface d'appui (18) adjacente au coussinet de soutien (21) et que la surface de soutien (22) s'étend, en formant un angle (C), de la surface d'appui (18) jusqu'au point d'intersection (S) entre les spires extérieures (15) et les branches (14) qui se déploient.

2. Dispositif collecteur selon la revendication 1, **caractérisé en ce que** la surface de soutien (22) s'étend en formant un angle (C) d'environ 40 degrés plus/moins 10 degrés.

3. Dispositif collecteur selon les revendications 1 ou 2, **caractérisé en ce que** la surface de soutien (22) s'étend, dans la zone entre les branches (14), au-delà du point d'intersection (S).

4. Dispositif collecteur selon l'une quelconque des revendications 1 à 3, **caractérisé en ce que** le coussinet de soutien (21) fait partie intégrante du support de griffe (5).

5. Dispositif collecteur selon l'une quelconque des revendications 1 à 4, **caractérisé en ce que** le coussinet de soutien (21) fait partie intégrante d'une plaque intermédiaire (25) agencée entre le double ressort à branches et le support de griffe (5).

6. Dispositif collecteur selon l'une quelconque des revendications 1 à 5, **caractérisé en ce que** la surface de soutien (22) présente sur le support de griffe (5) ou sur la plaque intermédiaire (25) possède des rainures (26).

7. Dispositif collecteur selon l'une quelconque des revendications 1 à 6, **caractérisé en ce qu'**un oeillet (17) est agencé entre les spires (15) et que dans chaque ressort, une plaque de pression (11) soutient la spire (15) intérieure à partir dudit oeillet (17).

8. Dispositif collecteur selon la revendication 7, **caractérisé en ce que** la plaque de pression (11) soutient les spires (15), en étant ajustée à l'intérieur de ces dernières, sur une zone d'angle de 40 degrés plus/moins 10 degrés.

9. Dispositif collecteur selon l'une quelconque des revendications 5 - et 6 à 8, si ces dernières dépendent de la revendication 5 - **caractérisé en ce que** la plaque intermédiaire (25) est réalisée dans un matériau résistant à l'usure et aux chocs.
